# EUROPÄISCHE PATENTSCHRIFT

(11) **EP 1 763 916 B1**
(45) Veröffentlichungstag und Bekanntmachung des Hinweises auf die Patenterteilung: **19.10.2011**
(21) Anmeldenummer: 05777841.7
(22) Anmeldetag: 04.07.2005
(51) Int. Cl.: H02H 9/04

(54) **VERFAHREN UND EINRICHTUNG ZUM SCHUTZ VOR ÜBERSPANNUNGEN IN GLEICHSTROMINSELNETZEN**
OVERVOLTAGE PROTECTION METHOD AND DEVICE FOR USE IN STAND-ALONE DC POWER NETWORKS
PROCEDE ET DISPOSITIF DE PROTECTION CONTRE DES SURTENSIONS DANS DES RESEAUX ISOLES A COURANT CONTINU

(30) Priorität: 05.07.2004 DE 102004032475
(43) Veröffentlichungstag der Anmeldung: 21.03.2007
(73) Patentinhaber: SIEMENS AKTIENGESELLSCHAFT, 80333 München (DE)
(72) Erfinder: BARTA, Otto, 91325 Adelsdorf (DE); RISIUS, Oskar, 91056 Erlangen (DE)
(86) Internationale Anmeldenummer: PCT/EP2005/053164
(87) Internationale Veröffentlichungsnummer: WO 2006/003191

(56) Entgegenhaltungen:
- DE-A1- 4 439 367
- DE-A1- 19 710 073
- DE-C1- 4 303 990
- DE-C1- 19 742 391
- PATENT ABSTRACTS OF JAPAN Bd. 017, Nr. 134 (E-1334), 19. März 1993 (1993-03-19) & JP 04 304716 A (NEC CORP), 28. Oktober 1992 (1992-10-28)

## Beschreibung

Die Erfindung betrifft ein Verfahren und eine Einrichtung zum Schutz vor Überspannungen in Gleichstrominselnetzen, insbesondere in Netzen mit nicht rückspeisefähigen Energiequellen, z.B. Brennstoffzellen, Dieselgeneratoren (Drehstromgeneratoren mit Gleichrichtern), Landanschluss mit Gleichrichter für die Einspeisung von Schiffsnetzen.

In Gleichstrom(DC)inselnetzen können unzulässig hohe Überspannungen durch rückspeisende Verbraucher entstehen, wenn die Speisequellen und/oder die weiteren angeschlossenen Verbraucher nicht ausreichend niederohmig sind. Als rückspeisende Verbraucher sind z.B. die Elektromotoren für den Antrieb von Arbeitsmaschinen zu nennen, z.B. für Lüfter, Pumpen, Kompressoren. Die auftretenden Überspannungen können zu Schäden in den elektrischen/elektronischen Steuerungen und deren Peripherien (Sensorik, Aktuatoren) führen. Des weiteren sind Fehlfunktionen nicht ausgeschlossen, die zu falsche Steuerbefehlen führen.

Als Stand der Technik werden gegen Überspannungen in den DC-Netzen passive Bauelemente, z.B. Varistoren, eingesetzt. Diese Varistoren haben den Nachteil, dass sie Dauer-Stromverbraucher sind. Dies steht der Vermeidung von Verlustleistungswärme entgegen. Des weiteren ist nachteilig, dass die Varistoren nicht einstellbar sind, und dass nur Spannungsspitzen abgebaut werden können. Notwendig ist jedoch eine echte Energievernichtung.

In Stand der Technik ist vorgesehen, dass die Spannung in dem DC-Netz fortlaufend gemessen wird und dass bei Überschreiten eines festgelegten, vorzugsweise netzspezifisch einstellbaren, Grenzwerts eine Spannungsabsenkung durch Zuschaltung eines Verbrauchers zum Abbau der Überspannungs-Energie vorgenommen wird. So ergibt sich eine Spannungsabsenkung, die besonders genau auf die Erfordernisse des jeweiligen DC-Netzes ausgelegt werden kann und gegenüber den bisher verwendeten passiven Bauelementen, die nicht selektiv genug eingestellt werden können, erhebliche Vorteile bietet.

Ein solches Schutzverfahren ist aus DE 197 10 073 bekannt.

Es ist Aufgabe der Erfindung, die bei der bestehenden Technik auftretenden Nachteile zu vermeiden und eine Lösung anzugeben, die in einem engen, einstellbaren Toleranzband Überspannungen abbaut.

Die Aufgabe wird durch die Merkmale der Ansprüche 1 und 4 gelöst. Es ist vorgesehen, dass in den DC-Inselnetzen durch rückspeisende Verbraucher verursachte Überspannungen durch aktiv wirkende Schaltungsmaßnahmen herabgesetzt werden.

In einer Ausgestaltung der Erfindung ist vorgesehen, dass die Zuschaltung des Verbrauchers bei Überschreiten des Grenzwerts automatisch erfolgt und einstellbar, insbesondere nach einer einstellbaren Zeit, automatisch überprüft und nach ausreichender Spannungsabsenkung beendet wird. Die Überprüfung nach einer einstellbaren Zeit ist dabei besonders einfach und sicher, es können jedoch auch andere Kriterien für die Ausschaltung des Verbrauchers gewählt werden.

In dieser erfindunsgemäßen Ausführung ist vorgesehen, dass eine erneute automatische Zuschaltung des Verbrauchers erfolgt, wenn die Spannung nicht unter den festgelegten Rückfallwert des Netzes oder Netzteils gesunken ist. So wird der Zustand beherrschbar, der sich einstellt, wenn erhebliche Energiemengen in das Netz zurückgespeist werden.

In einer besonders bevorzugten Ausgestaltung der Erfindung ist vorgesehen, dass als Verbraucher ein Widerstand aufgeschaltet wird, wobei vorgesehen ist, dass der Widerstand gekühlt, insbesondere luftgekühlt wird. So ergibt sich eine besonders einfache und sicher arbeitende Möglichkeit, die überschüssige Elektroenergie in Wärme umzusetzen.

In weiterer Ausbildung der Erfindung ist weiterhin vorgesehen, dass von Zeit zu Zeit, insbesondere in vorgeschriebenen Intervallen, die Funktion des Überspannungsschutzes, insbesondere manuell, überprüft wird. So kann den besonderen Sicherheitsanforderungen für einen Überspannungsschutz in Schiffsnetzen Rechnung getragen werden, wobei die Überprüfung sowohl periodisch, als auch nach dem Auftreten eines Überspannungsfalls durchgeführt werden kann.

Zur Durchführung des Verfahrens zum Überspannungsschutz von Gleichspannungsinselnetzen ist vorteilhaft eine Einrichtung vorgesehen, die Komponenten, wie einen Halbleiterschalter, insbesondere einen IGBT-Halbleiterschalter, einen Spannungsvergleicher, einen Hysteresewertspeicher, einen Speicher für die Einschaltdauer in einem Gehäuse sowie zur Energieumsetzung einen zuschaltbaren Lastwiderstand aufweist. So steht eine Einrichtung zur Verfügung, mit der das erfindungsgemäße Verfahren durchgeführt wird und die einen optimalen Schutz des Inselnetzes gegenüber Überspannungen gewährleisten kann.

In Ausgestaltung der Einrichtung ist vorgesehen, dass der Lastwiderstand je nach Höhe der in Wärme umzusetzenden Überspannungsenergie dimensioniert wird. Dabei richtet sich der Widerstandswert nach der Höhe der noch zulässigen Überspannung und dem Energieaufnahmevermögen der im Überspannungsfall am Netz angeschlossenen Verbraucher. Als wesentliche Parameter gehen das Trägheits- und Lastmoment der rückspeisenden Maschine ein. Als Widerstandsmaterial kommen alle üblichen Werkstoffe in Frage. Deren Bestimmung ist im wesentlichen abhängig von der zu erwartenden Erwärmung und der umgebenden Atmosphäre (aggressive Gase, Temperatur, Feuchtigkeit, salzhaltige Luft, Luftdruck). Je nach nutzbaren Raumverhältnissen kann der Lastwiderstand in vorhandene Schaltanlagen integriert oder als eigenständiges Gerät im separaten Gehäuse ausgeführt werden.

Beispielhafte Auslegung des Lastwiderstandes für ein Gleichstrominselnetz DC300-600V
(Bordnetz auf einem U-Boot):
zulässige Überspannung: 35V (d.h. max. Netzspannung 635V) rückspeisende Maschine: DC-Motor 300-600V, ca. 34-44kW Widerstandswert: 3,1 Ohm, dadurch Rückspeisestrom von ca. 200A
Ausführung des Lastwiderstandes:
Länge x Breite x Höhe = 330 x 311 x 372 mm, Gewicht 25 kg, Luftselbstkühlung (Eigenkonvektion), Schutzart IP23.

Der Funktionstest-Taster kann extern an geeigneter Stelle eingebaut werden.

Die erfindungsgemäße Einrichtung wird vorteilhaft einfach zwischen einem positiven und einem negativen Leiter des Inselnetzes angeordnet.

Die Erfindung wird anhand von Zeichnungen näher erläutert, aus denen weitere, wie auch aus den Unteransprüchen, erfindungswesentliche Einzelheiten entnehmbar sind.

Im einzelnen zeigen:
- FIGUR 1: ein typischer Überspannungsabbauverlauf;
- FIGUR 2: eine Innenschaltung der erfindungsgemäßen Einrichtung im Prinzip; und
- FIGUR 3: die Einbindung der erfindungsgemäßen Ein- richtung in ein Gleichstrominselnetz, z.B. auf einem Schiff.

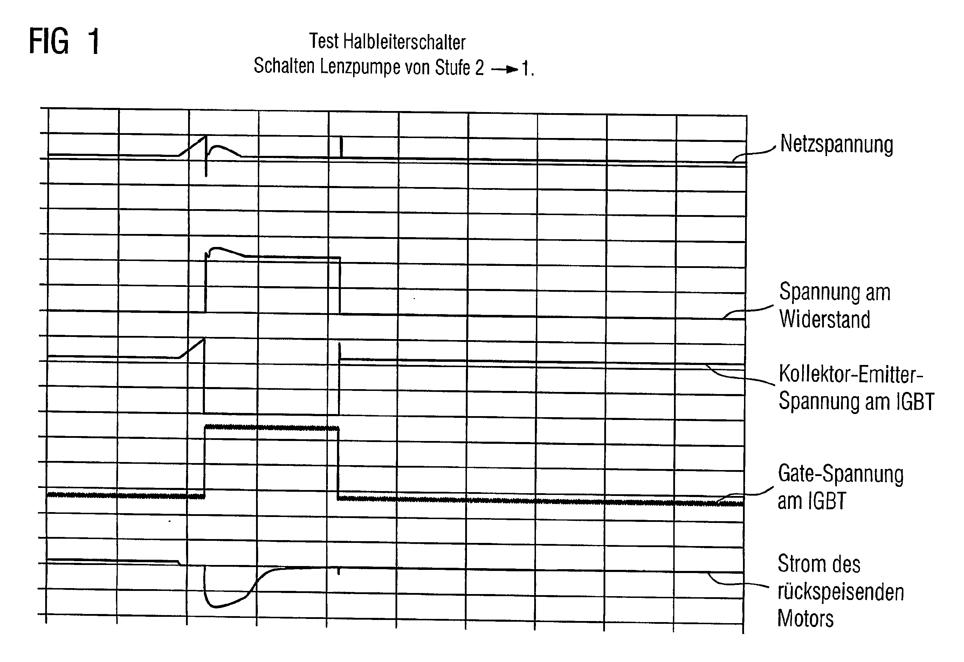

Figur 1 zeigt den Spannungs-Zeitverlauf, wie er etwa in einem Bordnetz eines U-Bootes beim Umschalten einer leistungsstarken Pumpe auf niedrigere Drehzahl auftritt. Die einzelnen Teile des Diagramms sind in üblicher Weise bezeichnet.

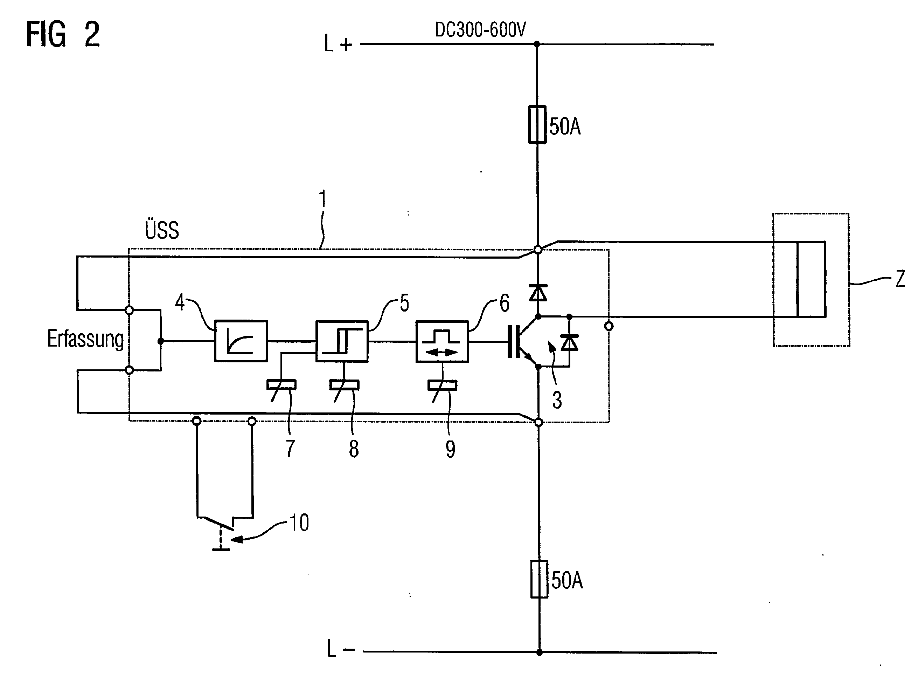

In Figur 2 bezeichnet 1 den Schaltungsteil der erfindungsgemäßen Einrichtung und 2 den bei Bedarf eingeschalteten Lastwiderstand. 3 bezeichnet den Halbleiterschalter sowie 4 den Speicher für die Glättungsfunktion; 5 den Speicher für den Hysteresewert und 6 den Speicher für die Dauer der Einschaltung des Halbleiterschalters 3. 7, 8 und 9 bezeichnen die Einsteller, typischerweise Potentiometer für die einzelnen Speicher und Komponenten. 10 bezeichnet den Funktionstesttaster. Die beiden Leiter des Schiffsnetzes sind mit L+ und L-bezeichnet. Als Spannung ist ein Beispielswert von 300 bis 600 V angegeben.

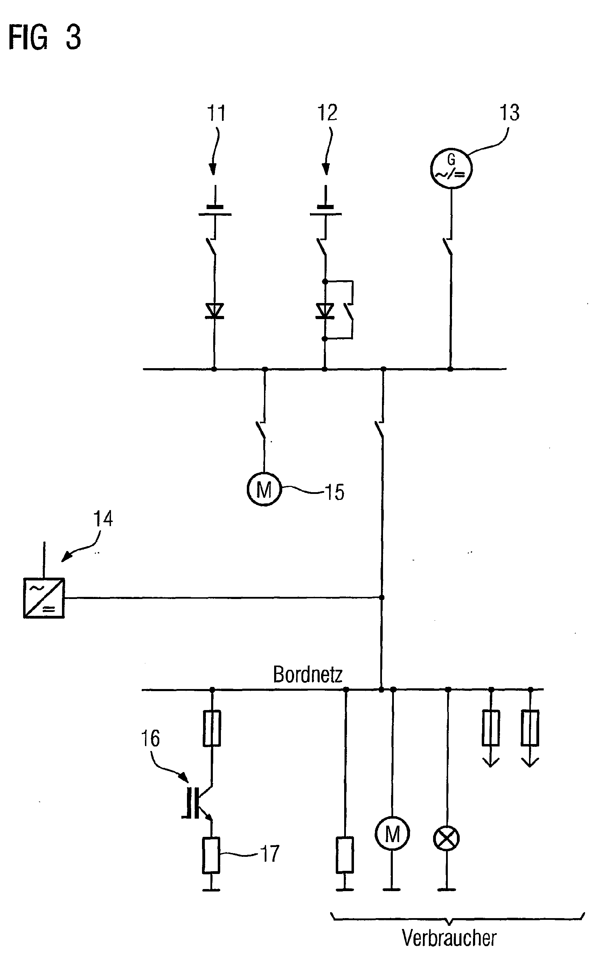

In Figur 3 sind die wesentlichen Komponenten eines Gleichstrominselnetzes beispielhaft für ein U-Boot schematisch dargestellt. Mit 11 ist die Brennstoffzelle bezeichnet, mit 12 der Batteriesatz und mit 13 der Ladegenerator für die Batterie. 14 bezeichnet den Landanschluss und 15 den Propellermotor. Unter den Energiequellen ist nur die Batterie bei überbrückter Diode rückspeisefähig, d.h. sie kann Überspannungsenergie aufnehmen. 16 bezeichnet die erfindungsgemäße Überspannungsschutzeinrichtung mit ihrem Lastwiderstand 17.

Figur 3 dient zur Übersicht, wie etwa die Überspannungsschutzeinrichtung im Gleichstrominselnetz angeordnet ist.

## Patentansprüche

1. U-Boot-Bordnetz-Überspannungsschutzverfahren, wobei das Bordnetz ein Gleichstromnetz ist, wobei
in dem U-Boot-Gleichstromnetz durch rückspeisende Verbraucher verursachte Überspannungen durch aktiv wirkende Schaltungsmaßnahmen herabgesetzt werden, wozu die Spannung in dem U-Boot-Gleichstromnetz fortlaufend gemessen wird und dass bei Überschreiten eines festgelegten, vorzugsweise netzspezifisch einstellbaren, Ansprech-Grenzwerts eine Spannungsabsenkung durch Zuschaltung eines zusätzlichen Widerstandes vorgenommen wird, **dadurch gekennzeichnet, dass** die Zuschaltung des Widerstandes bei Überschreiten des Ansprech-Grenzwerts automatisch erfolgt und einstellbar, insbesondere nach einer einstellbaren Zeit, automatisch beendet wird und wobei eine erneute automatische Zuschaltung des Widerstandes erfolgt, wenn die Netzspannung nicht unter einen festgelegten Wert gesunken ist.

2. Verfahren nach Anspruch 1, **dadurch gekennzeichnet, dass** der Widerstand gekühlt, insbesondere luftgekühlt, wird.

3. Verfahren nach einem oder mehreren der vorhergehenden Ansprüche, **dadurch gekennzeichnet, dass** von Zeit zu Zeit, insbesondere in vorgeschriebenen Intervallen, die Funktion des Überspannungsschutzes, insbesondere manuell überprüft wird.

4. Einrichtung zur Ausführung des Verfahren nach einem oder mehreren der vorhergehenden Ansprüche, **dadurch gekennzeichnet, dass** sie einen IGBT-Halbleiterschalter, einen Spannungsvergleicher, einen Hysteresewertspeicher, einen Speicher für die Einschaltdauer in einem Gehäuse sowie zum Spannungsabbau einen separaten zuschaltbaren Lastwiderstand aufweist.

5. Einrichtung nach Anspruch 4, **dadurch gekennzeichnet, dass** der Lastwiderstand im Rahmen der Umgebungsbedingungen und Umweltanforderungen und der Widerstandswert und die Bemessungsleistung an die Netzverhältnisse anpassbar ausgebildet ist.

6. Einrichtung nach Anspruch 4 oder 5, **dadurch gekennzeichnet, dass** sie zwischen einem positiven und einem negativen Leiter eines U-Boot-Gleichstromnetzes angeordnet ist.

7. Einrichtung nach Anspruch 4, 5 oder 6, **dadurch gekennzeichnet, dass** sie einen manuell betätigbaren Funktionstesttaster aufweist.

8. Einrichtung nach einem der Ansprüche 4 bis 7,
**dadurch gekennzeichnet, dass** sie in einem U-Boot mit zumindest einer Brennstoffzellenanlage zur Erzeugung von Elektroenergie, zum Schutz der Brennstoffzelle, ihrer Sensorik und ihrer Steuer- und Regeleinrichtungen verwendet wird.

## Claims

1. Submarine-vessel on-board power supply system overvoltage protection method, with the on-board power supply system being a direct-current power supply system, with overvoltages which are caused by loads that feed back in the submarine-vessel direct-current power supply system being reduced by actively acting circuit measures, for which purpose the voltage in the submarine-vessel direct-current power supply system is measured continuously, and with the voltage being reduced by connection of an additional resistance when a defined response limit value, which can preferably be set specifically for that power supply system, is exceeded, **characterized in that** the resistance is connected automatically when the response limit value is exceeded, and is ended automatically in a manner that can be adjusted, in particular after a time which can be set, and with the resistance being automatically connected again if the power supply system voltage has not fallen below a defined value.

2. Method according to Claim 1, **characterized in that** the resistance is cooled, in particular air-cooled.

3. Method according to one or more of the preceding claims, **characterized in that** the operation of the overvoltage protection, is checked, in particular manually, from time to time, in particular at specified intervals.

4. Device for carrying out the method according to one or more of the preceding claims, **characterized in that** the device has an IGBT semiconductor switch, a voltage comparator, a hysteresis value memory, a memory for the switched-on duration in a housing, as well as a separate load resistance, which can be connected for voltage reduction.

5. Device according to Claim 4, **characterized in that** the load resistance, depending on the environmental conditions and environmental requirements, and the resistance value and the rating are designed such that they can be matched to the power supply system conditions.

6. Device according to Claim 4 or 5, **characterized in that** the device is arranged between a positive and a negative conductor of a submarine-vessel direct-current power supply system.

7. Device according to Claim 4, 5 or 6, **characterized in that** the device has a manually operable function test button.

8. Device according to one of Claims 4 to 7, **characterized in that** the device is used in a submarine vessel having at least one fuel cell system for producing electrical power, for protection of the fuel cell, its sensor systems and its open-loop and closed-loop control devices.

## Revendications

1. Procédé de protection vis-à-vis de surtensions d'un réseau de bord de sous-marin, dans lequel
le réseau de bord est un réseau de courant continu, dans lequel on abaisse dans le réseau de courant continu du sous-marin par des mesures de montage à effet actif des surtensions provoquées par des utilisateurs d'alimentation en retour, en mesurant à cet effet en continu la tension dans le réseau de courant continu du sous-marin et en ce que, si une valeur limite de réaction fixée et réglable, de préférence d'une manière spécifique au réseau, est dépassée, on effectue un abaissement de la tension par branchement d'une résistance supplémentaire, **caractérisé en ce que** le branchement de la résistance, lors du dépassement de la valeur limite de réaction, s'effectue automatiquement et se termine automatiquement de manière réglable, notamment après une durée réglable et dans lequel un branchement automatique renouvelé de la résistance s'effectue lorsque la tension du réseau n'est pas abaissée en dessous d'une valeur fixée.

2. Procédé suivant la revendication 1, **caractérisé en ce que** l'on refroidit la résistance, notamment en la refroidissant par de l'air.

3. Procédé suivant l'une ou plusieurs des revendications précédentes, **caractérisé en ce que**, de temps à autre, notamment à des intervalles prescrits, on contrôle la fonction de protection vis-à-vis des surtensions, notamment manuellement.

4. Dispositif de mise en oeuvre du procédé selon l'une ou plusieurs des revendications précédentes, **caractérisé en ce qu'**il comporte un commutateur à semiconducteur IGBT, un comparateur de tension, une mémoire de valeur d'hystérésis, une mémoire de la durée de mise en circuit dans un boîtier ainsi que, pour la maîtrise de la tension, une résistance de charge pouvant être branchée séparément.

5. Dispositif suivant la revendication 4, **caractérisé en ce que** la résistance de charge est dans le cadre des conditions ambiantes et des exigences écologiques et la valeur de résistance et la puissance de mesure sont constituées de manière adaptable aux conditions du réseau.

6. Dispositif suivant la revendication 4 ou 5, **caractérisé en ce qu'**il est monté entre un conducteur positif et un conducteur négatif d'un réseau de courant continu de sous-marin.

7. Dispositif suivant la revendication 4, 5 ou 6, **caractérisé en ce qu'**il a un détecteur de test de fonction pouvant être actionné manuellement.

8. Dispositif suivant l'une des revendications 4 à 7, **caractérisé en ce qu'**il est utilisé dans un sous-marin ayant au moins une installation de piles à combustible pour la production d'énergie électrique, pour la protection des piles à combustible, de leur technique d'analyse et de leurs dispositifs de commande et de régulation.
